(19) **Europäisches Patentamt**

**European Patent Office**

**Office européen des brevets**

(11) **EP 1 416 683 A1**

(12) **EUROPEAN PATENT APPLICATION**

(43) Date of publication:
06.05.2004 Bulletin 2004/19

(51) Int Cl.$^7$: **H04L 12/56**, H04Q 7/38

(21) Application number: 02292733.9

(22) Date of filing: 31.10.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicants:
- **Mitsubishi Electric Information Technology Centre Europe B.V.**
  **1119 NS Schiphol Rijk (NL)**
  Designated Contracting States:
  **FR**
- **MITSUBISHI DENKI KABUSHIKI KAISHA**
  **Tokyo 100-8310 (JP)**
  Designated Contracting States:
  **AT BE CH CY DE DK ES FI GB GR IE IT LU MC NL PT SE TR CZ EE BG SK LI**

(72) Inventor: **Jechoux, Bruno, Mitsubishi Electricité**
**35700 Rennes (FR)**

(74) Representative: **Maillet, Alain**
**Cabinet le Guen & Maillet,**
**5, Place Newquay,**
**B.P. 70250**
**35802 Dinard Cedex (FR)**

(54) **Assigning modified transmission priorities for acknowledged mode in an UMTS network**

(57) The present invention relates to a method for the radio resource management of an UMTS network to determine the effective transmission priorities that are allocated to an user over the downlink and the uplink between an user equipment and a node base of said UMTS network, said method comprising the step of the originally allocating to an user transmission priorities ($P_{DL}$ and $P_{UL}$) over the downlink and over the uplink for a given service class, information transmitted over either the downlink or the uplink is the object of an acknowledgment packet transmitted over the uplink or the dowlink.

According to the invention, said method comprises the step of calculating the effective transmission priorities ($\tilde{P}_{DL}$ and $\tilde{P}_{UL}$) if an acknowledgment packet is expected to be received over the uplink or the downlink for information of a given service class transmitted over the downlink or the uplink in such a way that said effective transmission priorities ($\tilde{P}_{DL}$ and $\tilde{P}_{UL}$) are equal to or higher than the uplink and downlink priorities ($P_{DL}$ and $P_{UL}$) originally allocated to said user for said given service class.

Fig. 3

**Description**

The present invention relates to a method for managing radio resources in a mobile communication network of the third generation type such an UMTS (Universal Mobile Telecommunication System) network.

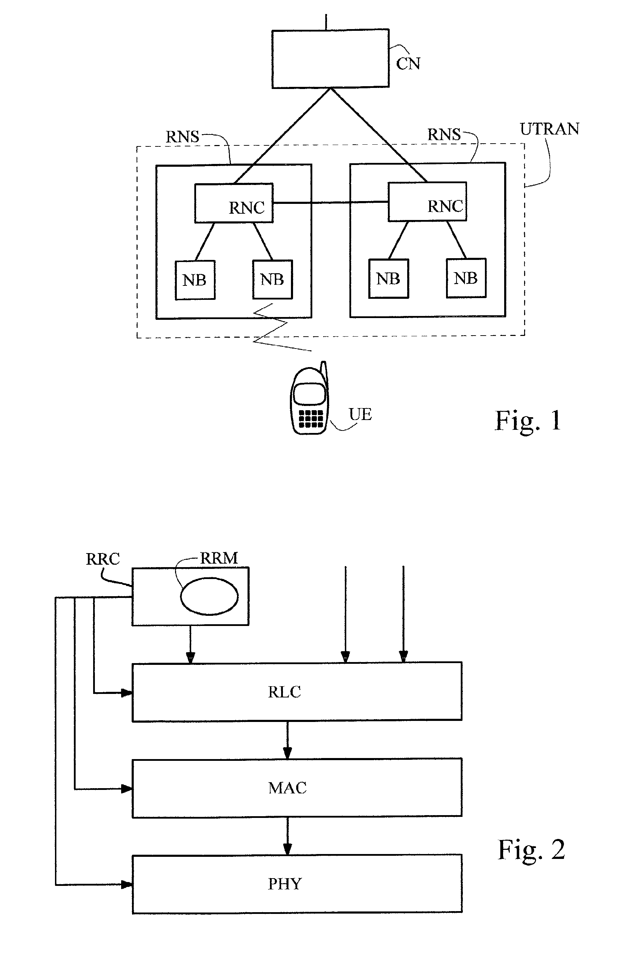

Fig. 1 shows the structure of an UMTS network which comprises a radio access network (here an Universal Territorial Radio Access Network UTRAN) linked to a core network (CN). The radio access network UTRAN consists of one or more Radio Network Sub-system RNS comprising each a Controller RNC which one or more base stations NB called NodeB are linked to. Each Radio Network Controller RNC is responsible for the control of the radio resources of the radio access network (UTRAN) and includes the functionalities of the Radio Resource Control RRC layer and particularly the so-called Radio Resource Management RRM functionalities (see Fig. 2). Note that an user equipment (UE) can communicate with one or more NodeBs.

Fig. 2 shows the overall protocol architecture of a radio interface of a third generation radio access network including a physical layer PHY, a medium access control layer MAC, a radio link control layer RLC and a radio resources control layer RRC.

The physical layer PHY is responsible for mapping the data that are generated by the higher layers and that are included in transport channels into physicals channels. The MAC (Media Access Control) layer ensures the multiplexing into transport channels of the user's data which are included in different logical channels either from the userplane or from the control-plane. The RLC (Radio Link Control) layer is responsible for the mapping of the user-plane radio bearers UPRB and the signaling radio bearers SRB into the logical channels transmitted to the MAC layer. The function of the RRC (Radio Resources Control) layer which is only in the control-plane is to manage the signaling between the access network UTRAN and the user equipment UE.

The RRC layer includes the radio resource management (RRM) functionalities. The radio resource management is responsible for utilization of the air interface resources in order for the network to guarantee a Quality of Service requested by the users. Generally, radio resource management includes handover, power control, admission control, load control and packet scheduling functionalities.

The radio resources management functionalities consist essentially in determining the Transport Format Combination Set (TFCS) regarding transport and traffic conditions, the Transport Format Combination (TFC) that can be used to transmit over the radio link and in signaling them to the MAC layer. The MAC layer receives the RLC-PDU (Protocol Data Unit), chooses the appropriate Transport Format (TF) of the Transport Format Combination (TFC) determined by the radio resource management (RRM) and schedules the transmission of transport blocks including the data to be transmitted according to the transport format (TF) over the physical layer (PHY).

The radio resource management (RRM) functionalities include Call Access Control and Load Control. The CAC function determines if a new mobile access can be accepted regarding the Quality of Service (QoS) requested and the current load of the network. The Load Control function ensures that the network is not overloaded and controls the different traffic parameters for this purpose.

Broadly speaking, the types of service of third generation mobile can be divided into two main classes : Real Time services, such as voice, video conferencing, etc. and Non Real Time services such as database applications, web browsing, email, etc. In this context, 3GPP defined four distinct traffic classes : Conversational and Streaming (RT services) and Interactive and Background (NRT services).

The goal of the RRM algorithms is to satisfy as much as possible the different service requests of the users. When a communication has to be established, the access network UTRAN receives from the core network CN a request for configuring in order to meet a radio access bearer RAB which is the result of a negotiation between the user and the network. The radio access bearer RAB is characterized by a number of attributes representing guarantied quality ensured by the system to the service : max data rate, guarantied data rate, SDU size, error rates, downlink and uplink priorities, etc.

These priorities will be referred to as RAB priorities in the following of the present description. The RAB priorities are constant by the time of the communication and are related to the kind of service requested by the user. For example, real time services must have a higher priority that non-real time services, and delay constrained services must have a higher priority than delay free services, etc.).

Once a service has been accepted by the Call Access Control with a related radio access bearer RAB associated to a certain RAB priority, its quality requirements must be fulfilled in average.

Since all the resources of the access network must be shared among all the services accepted by the CAC, at a given time, the resources allocated to one service can be increased or decreased if the overall resources used by the other services decreases or increases. So, the instantaneous available resources of the access network must be shared based on the instantaneous overall resources used by each service and in complying with the RAB.

Furthermore, as the Radio Access Bearer allocated to each service contains a minimum target quality of service QoS which corresponds for a given signal to interference and noise ratio to a maximum bit error rate BER, it is necessary to carefully control the level of interferences between mobile stations using the network and base stations of the network in order to match this quality of service for each allocated service requested. Since each new allocated resource increase the interference level throughout the system, it is necessary to evaluate and consider the interference status, i.e. the overall interference level, when allocating resources to a service and determining the instantaneous priorities thereto.

The instantaneous priority determining is an internal process included amongst the RRM functionalities. This process is not visible from a layer, called "Non Access Stratum" and responsible for all the functionalities of the UMTS network, those of the access network excepted.

Generally the Radio Resource Management functions are handled separately in Uplink and in Downlink. Considering the priorities for respectively the uplink and the downlink, one can write :

$$P_{DL} = P \text{ (DLIS, DLSR) and } P_{UL} = P' \text{ (ULIS, ULSR)} \qquad (1)$$

wherein DLIS and ULIS are the downlink and the uplink interference status representative of the interference levels respectively in the downlink and the uplink and DLSR and ULSR are the downlink and the uplink service requests related to the RAB respectively allocated to the downlink and the uplink. P and P' are functions enabling the calculations of $P_{DL}$ and $P_{UL}$ from the parameters DLIS and DLSR, ULIS and ULSR.

Real Time (RT) users may not be impacted by the choice to define separately the downlink and the uplink priorities since the Radio Access Bearer for these services should either be served or dropped (which means both DL and UL links kept or removed coherently). However, on the opposite, the Non Real Time (NRT) services are either served or not served but not dropped, which means that they keep their links with potentially different level of priority based on traffic volume measurements, for example, and different rates (including possibly a rate zero) in Uplink and in Downlink. The resources are allocated to this type of services by the Load Control function of the Radio Resource Management separately in Uplink and Downlink. It results that it is likely that a user that was assigned a high priority in Downlink [Uplink], is assigned a low one in Uplink [respectively in Downlink].

For interactive services such as web browsing or gaming (which may be highly asymmetric), it may create a lock-up state or at least a high delay situation where there is no resource available for the feedback link, hence preventing the system from efficiently applying the priorities.

Actually, when some Non-Real-Time services such as web browsing are accessed through the Radio Access Network (UTRAN), the Radio Link Control (RLC) layer (of either the User Equipment UE or of the Access Network) is configured in acknowledged mode and some acknowledgements are send back from the RLC receiver entity to the peer RLC sender entity when the RLC-PDUs (Protocol Data Unit) are correctly received. Due to the fact that a limited number of RLC-PDUs can be transmitted after the last acknowledged one, there is clearly a risk that the absence of sufficient priority for the acknowledgement prevents the acknowledgment packet to be transmitted and consequently stops the transmission of the RLC-PDUs at the sender side. Moreover if a TCP layer is used on the top of that, it implies some maximum acknowledgement delay otherwise the IP packet is automatically sent back even if it is not needed hence wasting some radio capacity.

Therefore the ability of the Radio access network UTRAN to provide fast acknowledgement is a key item that must be taken into account in order to ensure an efficient radio resource usage.

When an acknowledgement is to be transmitted in the downlink, it is identified as such in the RLC header of the control PDU carrying the Status Report (or of the AMD PDU if the acknowledgement is sent through a piggybacked status report) and this information is centralized and available for the RRM protocol to be carried out by the Radio Network Controller (RNC). Hence, it is relatively easy for the situation to be remedied.

Nevertheless, when an acknowledgement is to be transmitted in the Uplink, this information is known at the UE-side RLC layer but is not available at the Radio Network Controller (RNC) side for the RRM protocol to be carried out.

It is an object of the present invention to provide a method for the radio source management of a UMTS network to determine the effective transmission priorities that are allocated to a user over the downlink and the uplink between an user equipment and a node base of said UMTS network that overcome the aforementioned problems and therefore such a method wherein the allocation process of the radio resource management is such that the stopping of the transmission of the RLC-PDUs at the sender side due to acknowledgement is prevented.

The above object is achieved by the present invention which is characterized by the method for the radio source management of an UMTS network to determine the effective transmission priorities as claimed in claim 1.

The features of the invention mentioned above, as well as others, will emerge more clearly from a reading of the following description of example embodiments, the said description being given in relation to the appending drawings, amongst which :

Fig. 1 shows the structure of an UMTS network which a method according the present invention can be applied to,

Fig. 2 shows the protocol architecture of a radio interface of a third generation radio access network which a method according the present invention can be applied to,

Fig. 3 shows a diagram that illustrates the priority allocation carried out by the Radio Resource Management protocol according to a first embodiment of the present invention,

Fig. 4 shows a diagram that illustrates the priority allocation carried out by the Radio Resource Management protocol according to a second embodiment of the present invention, and

Fig. 5 shows a flow chart describing the application of a priority offset according to features of the present invention.

The present invention concerns a method for the radio resource management of a UMTS network to determine the effective transmission priorities that are allocated to service classes over the downlink and the uplink between an user equipment and a node base of said UMTS network. Such a network provides service classes and originally allocates to each of these service classes transmission priorities $P_{DL}$ and $P_{UL}$ for the downlink and the uplink. Furthermore, information transmitted over either the downlink or the uplink can be the object of an acknowledgment packet respectively transmitted over the uplink or the downlink, mainly for Non-Real-Time services wherein the Radio Link Control layer is configured in acknowledged mode.

According to the present invention, when an acknowledgment packet is expected to be received over the downlink or the uplink for information of a given service class transmitted over the downlink or the uplink, the effective transmission priorities ($\widetilde{P}_{DL}$ and $\widetilde{P}_{UL}$) that will effectively affect the packets respectively over the downlink and over the uplink for said service class are calculated in such a way that the said effective transmission priorities ($\widetilde{P}_{DL}$ and $\widetilde{P}_{UL}$) are equal to or higher that the downlink and uplink priorities ($P_{DL}$ and $P_{UL}$) originally allocated to said user for said given service class.

According to a first embodiment of the present invention, the effective transmission priorities ($\widetilde{P}_{DL}$ and $\widetilde{P}_{UL}$) are calculated in summing predetermined constant values $V_{DL}$ and $V_{UL}$ to the originally allocated priorities ($P_{DL}$ and $P_{UL}$). One can write the following expression :

$$\widetilde{P}_{DL} = P_{DL} + V_{DL}$$

and

$$\widetilde{P}_{UL} = P_{UL} + V_{UL}$$

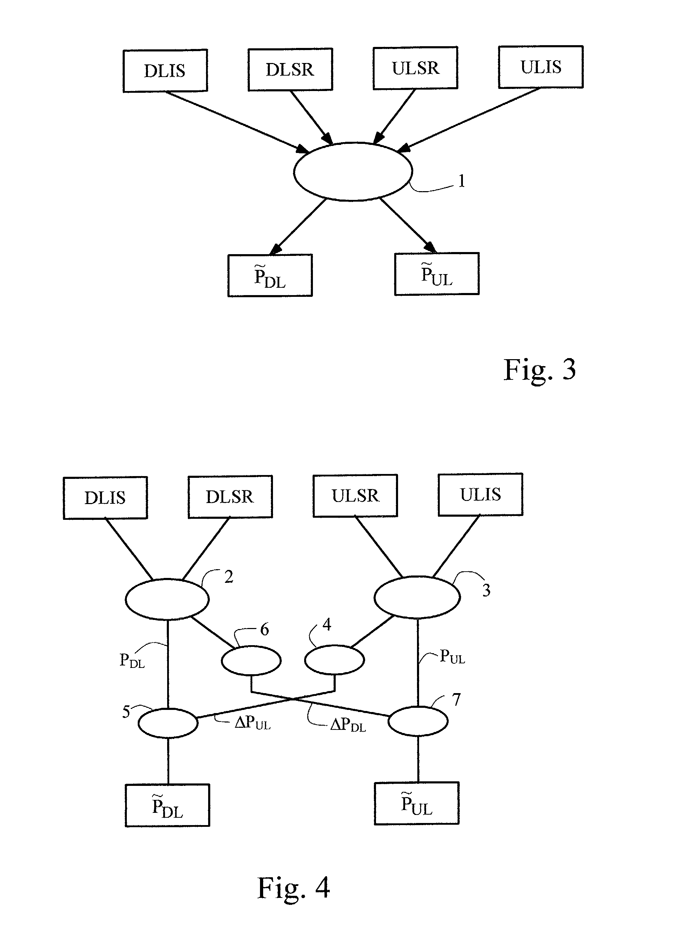

The diagram shown in Fig. 3 illustrates the effective priority allocation carried out by the Radio Resource Management protocol according to a second embodiment of the present invention. The effective priority allocation is realized coherently for the uplink and the downlink in a joint unit 1 which calculates the downlink and the uplink effective priorities $\widetilde{P}_{DL}$ and $\widetilde{P}_{UL}$ based on both uplink and downlink contexts. These contexts can be the downlink and uplink interference status DLIS and ULIS (which depend on the overall interference level between all the user equipments and the node bases) and the downlink and uplink service requests DLSR and ULSR (based on the radio access bearers allocated to both the downlink and the uplink). One can hence write the following expression :

$$\widetilde{P}_{DL} = P''( \text{DLIS, ULIS, DLSR, ULSR})$$

and

$$\widetilde{P}_{UL} = P'''( \text{DLIS, ULIS, DLSR, ULSR})$$

According to the invention, the downlink and the uplink effective priorities $\widetilde{P}_{DL}$ and $\widetilde{P}_{UL}$ have to be equal or higher to the downlink and the uplink priorities $P_{DL}$ and $P_{UL}$ originally respectively allocated to the downlink and the uplink.

In accordance to a variant of said second embodiment of the present invention, a coherent priority calculation can consist in obtaining the effective priorities $\widetilde{P}_{DL}$ and $\widetilde{P}_{UL}$ respectively for the downlink and the uplink by performing weighted sums of the transmission priorities originally allocated to the downlink and the uplink $P_{DL}$, $P_{UL}$ (which are independently calculated). One can write the following expression :

$$\widetilde{P}_{DL} = \alpha_{DL} \, P_{DL} + \beta_{DL} \, P_{UL}$$

$$\widetilde{P}_{UL} = \alpha_{UL} \, P_{UL} + \beta_{UL} \, P_{DL}$$

wherein $\alpha_{DL}$ and $\beta_{DL}$ are the weights for the downlink respectively applied to the priorities originally allocated in the downlink and uplink, $\alpha_{UL}$, $\beta_{UL}$ are the weights for the uplink respectively applied to the priorities originally allocated in the downlink and uplink.

Note that the priorities $P_{DL}$, $P_{UL}$ as originally allocated are downlink and uplink priorities calculated in a same way as in the prior art wherein they are calculated independently one to the other. For example, the priorities $P_{DL}$, $P_{UL}$ can be calculated according to the above cited expression (1).

Let's now consider N different levels of RAB priority respectively corresponding in fact to N service classes ( where the first satisfied service is the one with the highest priority value and the last one with the lowest priority value. For example, N = 3 and the allocation is as follows : a real time service would have a priority comprised between 2 and 3 (top priority), a non-real time service with delay constraints would have a priority comprised between 1 and 2 whereas non-real time service without delay constraints would have a priority between 0 and 1.

When a user has information to transmit, priorities are allocated in both the downlink and the uplink according to the resources available but also to the service class requested. For example, if a user requests Non-Real-Time service, the network can allocate to this user downlink and uplink priorities equal to 0.5. When an acknowledgment packet is expected to be received, these priorities are enhanced to become the effective priorities.

If we want to keep the effective priorities $\widetilde{P}_{DL}$ and $\widetilde{P}_{UL}$ within the RAB priorities intervals corresponding to its service class when applying the weights $\alpha_{DL}$, $\beta_{DL}$, $\alpha_{UL}$, $\beta_{UL}$ to the independently calculated priorities $P_{DL}$, $P_{UL}$ (i.e keep them in our example between 1 and 2 for delay constrained NRT services, between 0 and 1 for non delay constraint NRT), it's necessary to set $\alpha_{DL} + \beta_{DL} = 1$ and $\alpha_{UL} + \beta_{UL} = 1$ as constraints for the calculation of the final priorities $\widetilde{P}_{DL}$ and $\widetilde{P}_{UL}$. Moreover, as the original priority $P_{DL}$ in the downlink must stay pre-eminent in the downlink DL and, in the same way, the original priority $P_{UL}$ in the uplink must stay pre-eminent in the uplink UL, a selection of a constant value comprised between 0,5 and 1 for the weights $\alpha_{DL}$ and $\alpha_{UL}$ and of a constant value comprised between 0 and 0,5 for the weights $\beta_{DL}$ and $\beta_{UL}$ would be preferred. For example, $\alpha_{DL} = \alpha_{UL} = 0,8$ and $\beta_{DL} = \beta_{UL} = 0,2$ may be chosen.

Fig. 4 shows a diagram that illustrates the priority allocation carried out by the Radio Resource Management protocol according to a third embodiment of the present invention. It uses means 2 to calculate the priority $P_{DL}$ originally allocated to the downlink on basis of only the downlink parameters, i.e. the interference status DLIS and the service requests DLSR for the downlink (in accordance to expression (1)) and means 3 to calculate the priority $P_{UL}$ originally allocated to the uplink on basis of only the uplink parameters, i.e. the interference status ULIS and the service requests ULSR for the uplink (again in accordance to expression (1)). It still comprises means 4 to calculate an uplink priority offset term $\Delta P_{UL}$ taking the uplink contribution into account for the downlink and means 5 to calculate the final priority $\widetilde{P}_{DL}$ for the downlink by combining the exclusive downlink priority $P_{DL}$ and the uplink priority offset term $\Delta P_{UL}$. It still also comprises means 6 to calculate a downlink priority offset term $\Delta P_{DL}$ taking the downlink contribution into account for the uplink and means 7 to calculate the final priority $\widetilde{P}_{UL}$ for the uplink by combining the exclusive uplink priority $P_{UL}$ and the downlink priority offset term $\Delta P_{DL}$.

This can be expressed as follows :

$$\widetilde{P}_{DL} = f(P_{DL}, \Delta P_{UL})$$

and

$$\widetilde{P}_{UL} = f'(P_{UL}, \Delta P_{DL})$$

An example of combining is summing the exclusive priority and the priority offset. This can then be expressed as follows :

$$\widetilde{P}_{DL} = P_{DL} + \Delta P_{UL}$$

$$\widetilde{P}_{UL} = P_{UL} + \Delta P_{DL}$$

In accordance with a variant of said third embodiment, the priority offsets $\Delta P_{UL}$, $\Delta P_{DL}$ are function of binary values $\delta_{UL}$, $\delta_{DL}$ that can be equal to 1 when a priority offset is to be applied and 0 otherwise. More exactly, when an acknowledgment packet over the downlink is expected to be received, the binary value $\delta_{UL}$ is set to 1 and 0 otherwise. In a same way, when an acknowledgment packet over the uplink is expected to be received, the binary value $\delta_{DL}$ is set to 1 and 0 otherwise. One can write in the previous expression :

$$\Delta P_{UL} = F(\delta_{UL}) \text{ and } \Delta P_{DL} = F'(\delta_{DL})$$

One can again write the following expression which is equivalent to the previous one :

$$\widetilde{P}_{DL} = f(P_{DL}, \delta_{UL})$$

and

$$\widetilde{P}_{UL} = f'(P_{UL}, \delta_{DL})$$

As a matter of fact, when applying a method according to the third embodiment of the present invention, the constraint above-described for the first embodiment consisting in keeping the priority values within the range corresponding to its kind of service is still in force. This range corresponds to the RAB priorities intervals above defined and depends on the service classes. This range is limited by a lower priority referenced to as $P_{min}$ and higher priority referenced to as $P_{max}$.
A preferred way to achieve the calculation of the final priorities $\widetilde{P}_{DL}$ and $\widetilde{P}_{UL}$ is to use the following formula:

$$\widetilde{P}_{DL} = \delta_{UL}\left(P_{min} + O_{DL}\right) + \left(1 - \delta_{UL}\right)P_{DL}$$

and

$$\widetilde{P}_{UL} = \delta_{DL}\left(P_{min} + O_{UL}\right) + \left(1 - \delta_{DL}\right)P_{UL}$$

Here, $P_{min}$ define the priority range lower and upper limits for the service class of the corresponding link and $O_{DL}$ and $O_{UL}$ are priority offset values.
According to one embodiment of the present invention, the priority offset values $O_{DL}$ and $O_{UL}$ can be determined thanks to a constant value λ in the following way :

$$O_{DL} = \left( (P_{max} - P_{min}) \frac{\ln(P_{DL} + \lambda)}{\ln(P_{max} + \lambda)} \right)$$

and

$$O_{UL} = \left( (P_{max} - P_{min}) \frac{\ln(P_{UL} + \lambda)}{\ln(P_{max} + \lambda)} \right)$$

Adjusting the value of the tuning constant λ enables a tuning of the priority enhancement ; the higher is the value of the constant λ, the higher is the offset priority.

This formula can provide a significant increase of the priority while keeping the result in the allowed range and ensuring a correct ranking of the services for which the priority offset has been applied (i.e. if several services requiring feed back have their priorities enhanced simultaneously, their enhanced priorities will be ranked in the same order than previously in any case) and preventing from any saturation issue which would have occurred when an enhanced priority would have reached the max value hence preventing any other services whose original priority was higher than its one to get a higher enhanced priority.

The increase of the priority allocated to packets over a link, either the downlink or the uplink, resulting from the application of the method of the present invention prevents some packets from creating situations wherein transmission delays are dramatically increased and lock-up situations.

According to an embodiment of the present invention, the downlink priority offset term $\Delta P_{DL}$ is set-up in function of the resources that are allocated to the downlink. In a same way, the uplink priority offset term $\Delta P_{UL}$ is set-up in function of the resources that are allocated to the uplink.

According to another embodiment of the present invention, the method of the invention is carried out with a delay of application after the resources have been allocated to the considered link.

The present invention can be implemented in a mobile transmission system wherein data from a user are included in transport blocks that are concatenated or segmented and then transmitted within transmission time intervals TTI. Each transport block presents a transport format TF which depends on the resources allocated to the corresponding user. The transport blocks are queued and are transmitted within a transmission time intervals TTI according to the priority allocated to the user. According to the present invention, the priority for a block to be transmitted is the effective priority, i.e the effective priority $\tilde{P}_{DL}$ for the downlink and the effective priority $\tilde{P}_{UL}$ that have been enhanced in compliance with the method of the present invention.

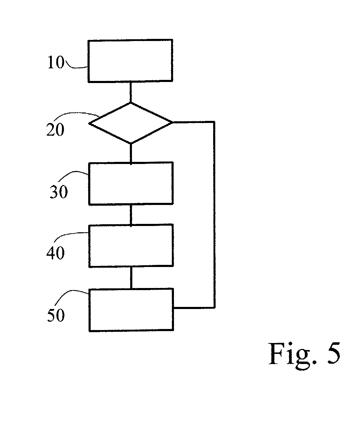

In case of the implementation of the present invention in such mobile transmission system, the application of a priority offset term can be realized in the following way as shown in the flow chart of Fig. 5. When the resources are allocated to a user i for the transmission of a transport block in a transmission time interval $TTI_k$ (step 10) for the downlink or the uplink, a step 20 checks if a priority offset is already applied to the priority. If so, the process is ended (step 50). If it is not the case, the process of application a priority offset is carried out.

The checking step 20 is necessary to prevent any user priority from infinitely increasing and hence diverging.

The process of application includes a waiting step 30 in order to wait a number M of transmission time intervals before launching the priority offset application (step 40). The priority offset is applied during N transmission time intervals. The priority offset application is performed in the same way as in the first embodiment related to Fig. 3 or in the second embodiment related to Fig. 4.

M and N define a time window wherein an acknowledgment packet is expected after a RLC-PDU has been transmitted.

## Claims

1.   Method for the radio resource management of an UMTS network to determine the effective transmission priorities that are allocated to an user over the downlink and the uplink between an user equipment and a node base of said UMTS network, said method comprising the step of originally allocating to an user transmission priorities ($P_{DL}$ and

$P_{UL}$) over the downlink and over the uplink for a given service class, information transmitted over either the downlink or the uplink is the object of an acknowledgment packet transmitted over the uplink or the downlink, **characterized in that** it comprises the step of calculating the effective transmission priorities ($\widetilde{P}_{DL}$ and $\widetilde{P}_{UL}$) when an acknowledgment packet is expected to be received over the uplink or the downlink for information of a given service class transmitted over the downlink or the uplink in such a way that the said effective transmission priorities ($\widetilde{P}_{DL}$ and $\widetilde{P}_{UL}$) are equal to or higher that the uplink and downlink priorities ($P_{DL}$ and $P_{UL}$) originally allocated to said user for said given service class.

2. Method according to claim 1, **characterized in that** the effective transmission priorities ($\widetilde{P}_{DL}$ and $\widetilde{P}_{UL}$) are calculated in summing predetermined constant values $V_{DL}$ and $V_{UL}$ to the originally allocated priorities ($P_{DL}$ and $P_{UL}$).

3. Method according to claim 1, **characterized in that** said effective uplink and downlink priorities are calculated in function of both the uplink and the downlink contexts so that said effective priorities are equal to or higher than the originally allocated priorities ($P_{DL}$ and $P_{UL}$).

4. Method according to claim 3, **characterized in that** said downlink and uplink contexts include a downlink interference status DLIS and an uplink interference status ULIS depending on an overall interference level between all the user equipments and the node bases respectively in the downlink and the uplink.

5. Method according to claim 3 or 4, **characterized in that** said downlink and uplink contexts include a downlink and an uplink service requests DLSR and ULSR based on the radio access bearers allocated to both the downlink and the uplink.

6. Method according to one of the preceding claims 2 to 5, **characterized in that** said effective transmission priorities respectively for the downlink and the uplink are calculated by performing weighted sums of the transmission priorities originally allocated to the downlink and the uplink according to the following expression :

$$\widetilde{P}_{DL} = \alpha_{DL}\, P_{DL} + \beta_{DL}\, P_{UL}$$

$$\widetilde{P}_{UL} = \alpha_{UL}\, P_{UL} + \beta_{UL}\, P_{DL}$$

wherein said $\alpha_{DL}$, $\beta_{DL}$ are weights depending on the downlink contexts and $\alpha_{UL}$ and $\beta_{UL}$ are weights depending on the uplink contexts.

7. Method according to claim 6, **characterized in that** the weights are set in a such a way that the sum of the weights depending on the downlink contexts is equal to the unity and the sum of the weights depending on the uplink contexts is equal to the unity :

$$\alpha_{DL} + \beta_{DL} = 1$$

and

$$\alpha_{UL} + \beta_{UL} = 1$$

8. Method according to claim 6 to 7, **characterized in that** the weights are set in a such a way that the weights $\alpha_{DL}$ and $\alpha_{UL}$ respectively depending on the downlink contexts and on the uplink contexts and that respectively weight the transmission priorities of the downlink and of the uplink are comprised between 0,5 and 1 and that the weights $\beta_{DL}$ and $\beta_{UL}$ respectively depending on the downlink contexts and on the uplink contexts and that respectively weight the transmission priorities of the uplink and of the downlink are comprised between 0 and 0,5.

9. Method according to one of the claims 2 to 5, **characterized in that** said the effective transmission downlink priority is calculated by combining the downlink priority $P_{DL}$ originally allocated and a uplink priority offset term $\Delta P_{UL}$ which

depends on the uplink contexts and that said effective transmission uplink priority is calculated by combining the uplink priority $P_{UL}$ originally allocated and a downlink priority offset term $\Delta P_{DL}$ which depends on the downlink contexts :

$$\widetilde{P}_{DL} = f(P_{DL}, \Delta P_{UL})$$

and

$$\widetilde{P}_{UL} = f'(P_{UL}, \Delta P_{DL})$$

wherein f and f are functions.

**10.** Method according to claim 9, **characterized in that** said uplink priority offset term $\Delta P_{UL}$ and downlink priority offset term $\Delta P_{DL}$ are set-up in function of the resources that are respectively allocated to the uplink and the downlink.

**11.** Method according to claim 9, **characterized in that** said downlink priority offset term is a function of a binary value $\delta_{DL}$ which is set to 1 when an acknowledgment packet is expected to be received over the downlink and to 0 otherwise and said uplink priority offset term is a function of a binary value $\delta_{UL}$ which is set to 1 when an acknowledgment packet is expected to be received over the uplink and to 0 otherwise.

**12.** Method according to claim 11, **characterized in that** said the effective downlink transmission priority and said effective uplink transmission priority are calculated according to the following expressions :

$$\widetilde{P}_{DL} = \delta_{UL}\left(P_{min} + O_{DL}\right) + \left(1 - \delta_{UL}\right)P_{DL}$$

and

$$\widetilde{P}_{UL} = \delta_{DL}\left(P_{min} + O_{UL}\right) + \left(1 - \delta_{DL}\right)P_{UL}$$

wherein $P_{min}$ represents the minimal value of the priority allocated to said given service class for either the downlink and the uplink, and $O_{DL}$ and $O_{UL}$ are downlink and uplink priority constants for respectively the downlink and the uplink.

**13.** Method according to claim 12, **characterized in that** said downlink priority constant and said uplink priority constant are calculated according to the following expressions :

$$O_{DL} = \left(\left(P_{max} - P_{min}\right)\frac{\ln\left(P_{DL} + \lambda\right)}{\ln\left(P_{max} + \lambda\right)}\right)$$

and

$$O_{UL} = \left( \left( P_{max} - P_{min} \right) \frac{\ln\left( P_{UL} + \lambda \right)}{\ln\left( P_{max} + \lambda \right)} \right)$$

wherein $\lambda$ represents a tuning constant.

**14.** Method according to one of the preceding claims, **characterized in that** the uplink or downlink priority originally allocated to said given service class is enhanced after a delay after the resources have been allocated to said uplink or downlink.

**15.** Method according to one of the preceding claims, wherein data are in the form of transport blocks transmitted over the downlink and the uplink within transmission time intervals, **characterized in that** it includes the step of, when resources are allocated to a user i for the transmission of a transport block in a transmission time interval $TTI_k$ over the downlink or the uplink, waiting for M of transmission time intervals after resources have been allocated before applying the enhancement of the priority.

**16.** Method according to one of the preceding claims, wherein data are in the form of transport blocks transmitted over the downlink and the uplink within transmission time intervals, **characterized in that** it includes the step of, when resources are allocated to a user i for the transmission of a transport block in a transmission time interval $TTI_k$ over the downlink or the uplink, checking if a priority enhancement is already applied to the originally priority and if it is not the case, applying the enhancement of the priority.

**17.** Method according to one of the preceding claims, wherein data are in the form of transport blocks transmitted over the downlink and the uplink within transmission time intervals, **characterized in that** it includes the step of applying said enhancement of the priority during N transmission time intervals.

Fig. 1

Fig. 2

Fig. 3

Fig. 4

Fig. 5

**European Patent Office**

**EUROPEAN SEARCH REPORT**

Application Number

EP 02 29 2733

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 00 60813 A (QUALCOMM INC) 12 October 2000 (2000-10-12) | 1,2, 14-17 | H04L12/56 H04Q7/38 |
| A | * page 6, line 1 - line 4 * <br> * page 6, line 32 - page 7, line 33 * <br> * page 8, line 18 - line 34 * <br> * page 9, line 24 - page 12, line 16 * <br> * page 16, line 20 - line 29 * <br> * page 19, line 30 - page 20, line 14 * <br> --- | 3-13 | |
| Y | IERA A ET AL: "TRANSPORT AND CONTROL ISSUES IN MULTIMEDIA WIRELESS NETWORKS" , WIRELESS NETWORKS, ACM, US, VOL. 2, NR. 3, PAGE(S) 249-261 XP000625343 ISSN: 1022-0038 | 1,2, 14-17 | |
| A | * abstract * <br><br> * page 250, right-hand column, line 6 - line 14 * <br> * page 251, left-hand column, line 1 - line 16 * <br> * page 252, left-hand column, paragraph 4 - page 253, left-hand column * <br> * page 255, left-hand column, line 19 - page 256, left-hand column, line 15 * <br> --- | 3-13 | TECHNICAL FIELDS SEARCHED (Int.Cl.7) <br><br> H04L <br> H04Q |
| A | US 6 026 083 A (ALBROW RICHARD JOHN ET AL) 15 February 2000 (2000-02-15) <br> * column 1, line 10 - line 18 * <br> * column 3, line 24 - column 5, line 56 * <br> --- | 1,2 | |
| A | WO 00 72608 A (TERRY STEPHEN E ;INTERDIGITAL TECH CORP (US)) 30 November 2000 (2000-11-30) <br> * page 4, line 8 - page 5, line 5 * <br> ----- | 1 | |

The present search report has been drawn up for all claims

| Place of search | Date of completion of the search | Examiner |
|---|---|---|
| MUNICH | 6 March 2003 | Müller, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 29 2733

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | | Publication date | Patent family member(s) | | Publication date |
|---|---|---|---|---|---|
| WO 0060813 | A | 12-10-2000 | AU | 4059300 A | 23-10-2000 |
| | | | BR | 0009492 A | 31-12-2002 |
| | | | CN | 1358380 T | 10-07-2002 |
| | | | EP | 1166502 A1 | 02-01-2002 |
| | | | WO | 0060813 A1 | 12-10-2000 |
| US 6026083 | A | 15-02-2000 | AT | 193964 T | 15-06-2000 |
| | | | AU | 3477795 A | 29-03-1996 |
| | | | BR | 9508939 A | 25-11-1997 |
| | | | CN | 1160469 A | 24-09-1997 |
| | | | DE | 69517529 D1 | 20-07-2000 |
| | | | EP | 0781495 A1 | 02-07-1997 |
| | | | FI | 971094 A | 14-03-1997 |
| | | | WO | 9608935 A1 | 21-03-1996 |
| | | | IL | 115148 A | 27-12-1998 |
| | | | JP | 10505967 T | 09-06-1998 |
| | | | ZA | 9507739 A | 06-05-1996 |
| WO 0072608 | A | 30-11-2000 | AU | 4858500 A | 12-12-2000 |
| | | | BR | 0010731 A | 19-02-2002 |
| | | | CN | 1351809 T | 29-05-2002 |
| | | | CN | 1379612 A | 13-11-2002 |
| | | | DE | 1179279 T1 | 02-10-2002 |
| | | | EG | 22002 A | 31-05-2002 |
| | | | EP | 1179279 A2 | 13-02-2002 |
| | | | EP | 1235394 A2 | 28-08-2002 |
| | | | EP | 1231744 A2 | 14-08-2002 |
| | | | ES | 2173820 T1 | 01-11-2002 |
| | | | JP | 2003500949 T | 07-01-2003 |
| | | | JP | 2002252602 A | 06-09-2002 |
| | | | JP | 2002305775 A | 18-10-2002 |
| | | | NO | 20015618 A | 21-12-2001 |
| | | | NO | 20020908 A | 21-12-2001 |
| | | | NO | 20020909 A | 21-12-2001 |
| | | | WO | 0072608 A2 | 30-11-2000 |

EPO FORM P0459

For more details about this annex : see Official Journal of the European Patent Office, No. 12/82